(19) Europäisches Patentamt
European Patent Office
Office européen des brevets

(11) Publication number: **0 087 956**
**B1**

(12) # EUROPEAN PATENT SPECIFICATION

(45) Date of publication of patent specification: **17.01.90**

(51) Int. Cl.5: **G 06 F 12/14**

(21) Application number: **83301026.7**

(22) Date of filing: **25.02.83**

(54) **System for controlling key storage unit.**

(30) Priority: **27.02.82 JP 31326/82**
**27.02.82 JP 31201/82**

(43) Date of publication of application:
**07.09.83 Bulletin 83/36**

(45) Publication of the grant of the patent:
**17.01.90 Bulletin 90/03**

(84) Designated Contracting States:
**DE FR GB**

(56) References cited:
**EP-A-0 019 358**
**US-A-3 761 883**

**NAVY TECHNICAL DISCLOSURE BULLETIN, vol. 4, no. 8, August 1979, pages 43-48, Arlington, US; D.R. WILCOX: "Block parallel access memory"**

**"IBM Technical Disclosure Bulletin", Vol. 14, No. 5, Oct 1971, pp 1543, 1544**

(73) Proprietor: **FUJITSU LIMITED**
**1015, Kamikodanaka Nakahara-ku**
**Kawasaki-shi Kanagawa 211 (JP)**

(72) Inventor: **Chiba, Takashi**
**Dai-2 Saginuma Greenhill 206 4-4-11, Tsuchihashi**
**Miayamae-ku Kawasaki-shi Kanagawa 213 (JP)**
Inventor: **Koga, Satoru**
**Heiwa-so 669, Miyauchi Nakahara-ku**
**Kawasaki-shi Kanagawa 211 (JP)**
Inventor: **Senda, Minji**
**2868-5, Iijima-cho Totsuka-ku**
**Yokohama-shi Kanagawa 244 (JP)**

(74) Representative: **Fane, Christopher Robin King et al**
**HASELTINE LAKE & CO. Hazlitt House 28**
**Southampton Buildings Chancery Lane**
**London, WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 087 956 B1**

## Description

In a digital processing system, a key storage unit may be used for protecting the computer program or other contents of a main storage unit. In such a key storage unit, a main storage protection key, a reference bit, and a change bit corresponding to each unit block of the main storage unit are stored. When a central processing unit is going to access an address in a unit block of the main storage unit the main storage protection key stored in the key storage unit is compared with a key presented by the central processing unit. If these two keys coincide, the central processing unit can access the address in the unit block. If these two keys do not coincide, however, the central processing unit cannot access the address in the unit block.

In the above key storage unit, when the data stored in one block of the main storage unit is read (fetched) by the central processing unit, the reference bit corresponding to that block of the main storage unit must be set to the logic "1". When the data stored in the block of the main storage unit is written (stored) by the central processing unit both the reference bit and the change bit corresponding to the block of the main storage unit must be set to the logic "1". Generally, keys on the main storage unit are provided for every unit block of 2K bytes or 4K bytes, and every time the data in the main storage unit are fetched or stored, the reference bit and the change bit in the key corresponding to the block including the fetched or stored data must be renewed as described above.

Data access to the main storage unit is usually executed by the interleave control method. However, use of the interleave control method for data access to the key storage unit makes the control process complicated, increases the amount of the hardware, and increases the cost. Thus, the key storage unit must comprise a memory device of higher access speed than the main storage unit. For example, if the main storage unit comprises a metal oxide semiconductor (MOS) random access memory (RAM) device, the key storage unit may comprise a dynamic RAM device. However, the greater the capacity of the main storage unit, the more difficult the construction of the key storage unit and the higher the cost.

It is desirable to provide a means of avoiding such need for the accessing speed of the key storage unit to be higher than that of the main storage unit.

According to the present invention there is provided data processing apparatus comprising:

a main storage unit comprising a plurality of memory blocks;

a key storage unit for storing in respect of each of the said memory blocks a corresponding main storage protection key and a corresponding reference bit, which is set if the corresponding block is read or written into, and a corresponding change bit, which indicates a change of the corresponding block;

a processing unit operable to produce block access requests designating respective selected memory blocks of the main storage unit;

a main storage control unit, operatively connected to the main storage unit and to the said processing unit, for processing the block access requests and producing in response to each of them in turn a key storage access request for the key storage unit, which key storage access request demands a particular setting for at least one of those reference and change bits in the key storage unit that correspond to the selected memory block designated in the block access request concerned; and

a key storage control unit, for controlling access to the key storage unit, including a key queue operatively connected to the main storage control unit, and to the key storage unit, for temporarily holding a plurality of the said key storage access requests supplied from the main storage control unit; operation of the key storage control unit being such that key storage access requests from the main storage control unit are registered in order in the key queue and, independently of that registration process, key storage access requests already registered in the key queue are read out therefrom in turn for further processing;

the said key storage control unit further including comparing means, operatively connected for effecting a comparison between predetermined portions of each key storage access request newly supplied from the main storage control unit and respective corresponding portions of key storage access requests already registered in the key queue, and inhibiting means operatively connected to the said comparing means and the key queue for inhibiting such a newly-supplied key storage access request from being registered in the key queue if the said predetermined portions of the newly-supplied key storage access request are found by the said comparison to be identical to the corresponding portions of one of the key storage access requests already registered in the key queue.

Thus, an embodiment of the present invention can provide apparatus in which access frequency to the key storage unit is decreased, so that the key storage unit can comprise a memory device having the same access speed as the main storage unit.

Data processing apparatus disclosed in IBM Technical Disclosure Bulletin Vol. 14, No. 5, October 1971, pp 1543, 1544 includes a main storage unit comprising a plurality of memory blocks, which are accessible by associative addressing, a key storage unit for storing in respect of each of the said memory blocks a corresponding main storage protection key, a processing unit operable to produce block access requests designating respective selected memory blocks of the main storage unit, a main storage control unit, operatively connected to the said main storage unit and to the said processing unit, for processing the block access requests and producing in response to each of them in turn a key storage access request for the key storage unit, and a key storage control unit for controlling access to the key storage unit. Unlike apparatus embodying the present invention, however, the key storage control unit of this prior art apparatus does not include a key queue for temporarily holding a plurality of the key storage access requests, nor does it include comparing means for effecting a comparison between newly-supplied key storage access requests and requests already registered in the key queue or inhibiting means for inhibiting a newly-supplied key storage access request from being registered in the key queue in dependence upon the result of the aforementioned comparison. In addition, the IBM document does not disclose the use of reference and change bits, and hence does not disclose the updating of such bits.

Reference will now be made, by way of example, to the accompanying drawings, in which:

Fig. 1 is a block diagram of data processing apparatus embodying the present invention;

Fig. 2 shows a portion of the apparatus of Fig. 1 in more detail;

Figs. 3A, 3B, 3C, 3D and 3E show circuitry included in the portion of apparatus shown in Fig. 2;

Figs. 4A, 4B and 4C illustrate respective formats of the contents of various portions of the apparatus of Fig. 1; and

Fig. 5 is an operation diagram.

In Fig. 1, data processing apparatus embodying the present invention includes a main storage unit 1, divided into a plurality of blocks, a key storage unit 2, a main storage control unit 3, a key storage control unit 4, a group of central processing units (CPU) 5, and a group of channel processing units (CHP) 6. The key storage unit 2 stores an individual memory protection key, reference bit, and change bit for each unit block of the main storage unit 1. The main storage control unit 3 controls access to the main storage unit 1, and the key storage control unit 4 controls access to the key storage unit 2. Every time the main storage control unit 3 is going to access the main storage unit 1, the main storage control unit 3 outputs a key-storage access request to the key storage control unit 4. When a unit in the CPU group 5 or the CHP group 6 is going to access the key storage unit 2, it also outputs a key-storage access request to the key storage control unit 4. When one of the CPU group 5 or the CHP group 6 is going to access a unit block of the main storage unit for the first time, the CPU or CHP outputs an insert storage key (ISK) command to the key storage control unit 4, reads the content of the entry of the key storage unit 2 corresponding to the unit block of the main storage unit 1, and checks itself whether the CPU or the CHP is qualified to access the present unit block.

The construction of the key storage control unit 4 is illustrated in Fig. 2. In Fig. 2, 7 indicates an in-queue counter, 8 indicates a key queue, 9 indicates a key register, 10 indicates a group of comparator circuits, 11 indicates a key storage access register, 12 indicates a selector circuit, 13 indicates an out-queue counter, 14 indicates a comparator circuit, and 15 indicates a control circuit.

The key queue 8 comprises n-stage unit memories 8-1 through 8-n. Each unit memory 8-1 through 8-n has a unit block address, a reference bit (R bit), a change bit (C bit), a validity bit (V bit), and a key-storage access request bit (RQ bit). The group of comparator circuits 10 comprises n comparator circuits 10-1 through 10-n corresponding to the unit memories 8-1 through 8-n of the key queue 8, respectively. The in-queue counter 7 is used for designating the unit memory of the key queue 8 into which data should be input. When the data of the address, the R bit, and the C bit in the key register 9 are registered in the key queue 8, the in-queue counter 7 is counted up by +1 and designates the next unit memory of the key queue 8.

The key register 9 is used for setting the key-storage access request supplied from a request source, for example a unit of CPU group 5 or CHP group 6, or the main storage control unit 3, and has an operation code (OPC) portion 9-1, an address portion 9-2, and a key data portion 9-3. The operation code (OPC) in the key-storage access request is one of the codes designating a data fetch command, a data store command, or key commands. The address in the key-storage access request designates a unit block address. The key data is the data to be written in the key storage unit at the execution of a key command.

Like the key register 9, the key-storage access register 11 has an operation code (OPC) portion 11-1, an address portion 11-2, and a key data portion 11-3. Respective output terminals from each portion of the key register 9 are connected to respective input terminals of each corresponding portion of the key storage access register 11. The output terminals of the OPC portion 9-1 are also connected to the input terminals of the comparator circuit group 10. The output terminals of the address portion 9-2 are also connected to the address data input terminals of the key queue 8 and to the input terminals of the comparator circuit group 10. The address bit read-out terminals of each unit memory 8-1 through 8-n of the key queue 8 are connected to the input terminals of each corresponding comparator circuit 10-1 through 10-n and to corresponding input terminals of the selector circuit 12. The R bit and C bit read-out terminals of each unit memory 8-1 through 8-n of the key queue 8 are connected to the input terminals of each corresponding comparator circuit 10-1 through 10-n and to the corresponding input terminals of the key data portion 11-3 of the key-storage access register 11. The V bit and RQ bit read-out terminals of each unit memory 8-1 through 8-n of the key queue 8 are connected to the input terminals of each corresponding comparator circuit 10-1 through 10-n.

The output terminals of the comparator circuits 10-1 through 10-n are connected to the input terminals of the control circuit 15 which executes a control operation in accordance with the result of the comparison in the comparator circuits 10-1 through 10-n. The output terminals of the out-queue counter 13 are connected to the select input terminals of the selector circuit 12 and to the input terminals of the OPC portion 11-1 of the key-storage access register 11. The out-queue counter 13 is used for designating one of the unit memories 8-1 through 8-n of the key queue 8 to be set into the key-storage access register 11. Every time the content of one of the unit memories 8-1 through 8-n is set into the key-storage access register 11, the corresponding RQ bit in the key queue 8 is rest to the logic "0" and the out-queue counter 13 is counted up by +1. Output terminals of the selector circuit 12 are connected to the input terminals of the address portion 11-2 of the key-storage access register 11. The outputs of the key-storage access register 11 are supplied to the key storage unit 2.

The contents of the in-queue counter 7 and the out-queue counter 13 are supplied to the comparator circuit 14. The comparator circuit 14 compares the contents of these two counters 7 and 13. When these two contents become equal at a time when the in-queue counter 7 is up-counted, the comparator circuit 14 judges that the key queue 8 is full, and produces a "full" signal (Q · FULL). When these two contents become equal at a time when the out-queue counter 13 is up-counted, the comparator circuit 14 judges that all the unit memories 8-1 through 8-n of the key queue 8 are empty and produces an "empty" signal (Q · EMP). These "full" and "empty" signals are supplied to the control circuit 15. The control circuit 15 is connected to each portion of the key storage control unit 4 and executes the necessary control operations.

The operations for controlling the key storage unit 2 executed by the key storage control unit 4 shown in Fig. 2 will now be described.

The operation code, address, and key data of the key-storage access request supplied from the main storage control unit 3 or a processing unit of CPU group 5 or CHP group 6 are set in the key register 9. The key-storage access request is processed in accordance with the content of the operation code, that is a data fetch command, data store command, or key command.

In the case of a data fetch command, the data stored in the unit memories 8-1 through 8-n are read out and these data are compared with the content of the key register 9 in the comparator circuits 10-1 through 10-n.

If the address data of any one of the unit memories 8-1 through 8-n with the V bit of logic "1" are equal to the content of the address portion 9-2 of the key register 9, the key control operation concerned is brought to an end, making it possible for the key register 9 to receive the next key storage access request.

If none of the address data of the unit memories 8-1 through 8-n with the V bit of logic "1" are equal to the content of the address portion 9-2 of the key register 9 and if the key queue 8 is not full up, the content of the address portion 9-2 of the key register 9 is written into the unit memory of the key queue 8 designated by the in-queue counter 7, the R and C bits of this unit memory are set to "1, 0", and the V bit and the RQ bit of this unit memory are set to the logic "1". Then the in-queue counter 7 is counted up by +1, and it becomes possible for the key register 9 to receive the next key storage access request.

If none of the address data of the unit memories with the V bit of logic "1" are equal to the content of the address portion 9-2 and if the key queue 8 is full up, the process of writing the content of the address portion 9-2 into the unit memory of the key queue is stopped until a unit memory of the key queue becomes empty. In this case, the key storage control unit 4 falls into the "busy" condition, and it is not possible for the key register 9 to receive the next key-storage access request.

In the case of the data store command, the entry data stored in the unit memories 8-1 through 8-n of the key queue 8 are read out and these data are compared with the content of the key register 9 in the comparator circuits 10-1 through 10-n.

If the address data of any one of the unit memories with the V bit of logic "1" is equal to the content of the address portion 9-2 and the R and C bits of this unit memory are "1, 0" and if the key queue 8 is not full up, the V bit and the RQ bit of this unit memory are reset to "0", the content of the address portion 9-2 is written into the unit memory of the key queue 8 designated by the in-queue counter 7, and the R and C bits of this unit memory are set to "1, 1". Then, the in-queue counter 7 is counted up by +1. After the above process, it becomes possible for the key register 9 to receive the next key-storage access request.

If the R and C bits of the unit memory with address data equal to the content of the address portion 9-2 are "1, 0" and if the key queue 8 is full, the execution of the above-mentioned process stops until a unit memory of the key queue 8 becomes empty. In this case, the key storage control unit 4 falls into the "busy" condition, and it is not possible for the key register 9 to receive the next key storage access request. If the R and C bits of the unit memory with the address data equal to the content of the address portion 9-2 are "1, 1", the key control operation concerned is brought to an end, making it possible for the key register 9 to receive the next key-storage access request.

If none of the address data of the unit memories 8-1 through 8-n are equal to the content of the address portion 9-2 and if the key queue 8 is not full, the content of the address portion 9-2 is written into the unit memory designated by the in-queue counter 7, the R and C bits of this unit memory are set to "1, 1", and the V and RQ bits of this unit memory are set to the logic "1". Then, it becomes possible for the key register 9 to receive the next key-storage access request.

If none of the address data of the unit memories 8-1 through 8-n are equal to the content of the address portion 9-2 and if the key queue 8 is full, the above-mentioned process stops until a unit memory of the key queue 8 becomes empty. In this case, the key storage control unit 4 falls into the "busy" condition, and it is impossible for the key register 9 to receive the next key-storage access request.

The key commands include a set storage key (SSK) command for setting the content of the first operand into the main storage protection key of the block designated by the second operand, an insert main storage key (ISK) command for inserting the main storage protection key of the block designated by the second operand into the first operand, and a reset reference bit (RRB) command for resetting the reference bit corresponding to the main storage protection key of the block designated by the second operand.

When one of these key commands is received by the key register 9, the entry data stored in the unit memories 8-1 through 8-n of the key queue 8 are read out, and these entry data are compared with the content of the address portion 9-2 of the key register 9. If the content of the address portion 9-2 is equal to one of these entry data and if the V bit and the RQ bit of the entry data are both logic "1", the key queue is defined as being in a coincidence condition. The execution of the key command stops until the coincidence condition is released. In this condition, it is not possible for the key register 9 to receive the next key-storage access request. If the key queue 8 is not in the coincidence condition, the content of the key register 9 is set into the key-storage access register 11, and the operation for the key storage unit 2 is started. Then, it becomes possible for the key register 9 to receive the next key-storage access request.

Separate from the above-mentioned operations, when the key queue 8 is not empty and the key command is not operated, the entry data stored in the unit memory of the key queue 8 designated by the out-queue counter 13 are read out, and the content of the entry data is set into the key-storage access register 11. If the V bit and the RQ bit of the entry data are both logic "1", the operation for controlling the change of the R and C bits in the key storage unit 2 is started. After the entry data in the key queue 8 is read out and the content of the entry data is set into the key-storage access register 11, the RQ bit of the corresponding unit memory in the key queue 8 is reset to the logic "0" and the out-queue counter 13 is counted up by +1.

The construction of the control circuit of the key-storage control unit 4 for carrying out the above-mentioned operations is illustrated in Figs. 3A, 3B, 3C, 3D and 3E. In these figures, 21 through 41 indicate AND gate circuits, 42 through 46 indicate NOT gate circuits, 47 through 53 indicate OR gate circuits, 54 through 57 indicate flip-flop circuits, and 58 through 60 indicate decoder circuits. The R bit (reference bit) of the unit memory 8-1 in the key queue 8 is denoted by $R_1$, its C bit (change bit) is denoted by $C_1$, its V bit (validity bit) is denoted by $V_1$, and its RQ bit (key-storage access request bit) is denoted by $RQ_1$. Generally, the R bit, C bit, V bit, and RQ bit of the unit memory 8-i of the key queue 8 are denoted respectively by $R_i$, $C_i$, $V_i$, and $RQ_i$. The unit memory 8-i will be denoted by the entry i hereafter.

Figure 3A illustrates a portion of the control circuit 15 for producing "busy" signals (KR · BUSY and KSAR · BUSY) for the key register 9 and the key-storage access register 11. When a key-storage access request is supplied from the main storage control unit 4 or a unit of the CPU group 5 or the CHP group 6, it is supplied to the flip-flop circuit 54 through the AND gate circuit 21, the flip-flop 54 is set if it has been in the reset condition, and a key register busy signal (KR · BUSY) of logic "1" is output. The operation code of the key-storage access request is set into the operation code portion 9-1 of the key register 9, and the content of the operation code portion 9-1 is decoded by the decoder circuit 58 to decide whether the key-storage access request is any one among the data fetch command, the data store command, and the key command. The key register busy signal (KR · BUSY) is reset by the output signal of the OR gate circuit 47 which is supplied to the flip-flop circuit 54 through the AND gate circuit 22. The reset condition for the key register busy signal is that any one of the following five conditions is fulfilled, as shown in Fig. 3A:—

1. The key storage access request is a data fetch command (DATA · FETCH), and the content of the address portion 9-2 is equal to one entry with V bit of logic "1" (the "equal" signal with the entry of V=1 (V=1 · EQU) is logic "1");

2. The key storage access request is a data fetch command (DATA · FETCH), and the queue register signal (Q · REG), defined later, is logic "1";

3. The key storage access request is a data store command (DATA · STORE), the "equal" signal with the entry of

$$V=1(V=1 \cdot EQU)$$

is logic "1", and the R and C bits of the entry with the same address data are "1, 1" (that is RC="1, 1");

4. The key-storage access request is a data store command (DATA · STORE), the "equal" signal with the entry of V=1 (V=1 · EQU) is logic "1", and the queue register signal (Q · REG) is logic "1"; and

5. The key-storage access request is a key command (KEY · COM), the content of the address portion 9-2 is not equal to the address data of any entry with

$$V=RQ=1(V=RQ=1 \cdot UNEQ),$$

and the key storage access register busy signal (KSAR · BUSY) is logic "0".

These five conditions are represented by the outputs of the AND gate circuits 23, 24, 25, 26, and 27, respectively. The outputs of these five AND gate circuits are supplied to the OR gate circuit 47.

The inverted output of the AND gate circuit 27 and the inverted signal of the queue empty signal (Q · EMP) are supplied to the AND gate circuit 28. The non-inverted output of the AND gate circuit 27 and the output of the AND gate circuit 28 are supplied to the OR gate circuit 48. The output of the AND gate circuit 28 is the queue read signal (Q · READ). The output of the OR gate circuit 48 is supplied to the set input of the flip-flop circuit 55. The key storage access signal (KS · ACC) is supplied to the reset input of the flip-flop circuit 55. The output of the flip-flop circuit 55 is the key storage access register busy signal (KSAR · BUSY).

The construction of a portion of the control circuit 15 for judging whether or not the content of the key register 9 is equal to the entry data stored in the key queue 8 is illustrated in Fig. 3B. The address data of the entries 1 through n of the key queue 8 are compared with the content of the address portion 9-2 of the key register 9 in the comparator circuits 10-1 through 10-n. The output of the comparator circuit 10-i and the V bit of the entry i of the key queue 8 are supplied to the AND gate circuit 29-i. The output of the comparator circuit 10-i and the V and RQ bits of the entry i of the key queue 8 are supplied to the AND gate circuit 30-i. The outputs (EQU1 through EQUn) of the AND gate circuits 29-1 through 29-n are supplied to the OR gate circuit 49. The non-inverted output of the OR gate circuit 49 becomes logic "1" when the content of the address portion 9-2 is equal to the address data of an entry with V bit of logic "1", and this output is denoted by the "equal" signal with entry of V=1 (V=1 · EQU). The inverted signal of the OR gate circuit 49 is denoted by the "unequal" signal with entry of V=1 (V=1 · UNEQ). The outputs of the AND gate circuits 30-1 to 30-n are supplied to the OR gate circuit 50. The non-inverted output of the OR gate circuit 50 becomes logic "1" when the content of the address portion 9-2 is equal to the address data of one entry with V bit of logic "1" and with RQ bit of logic "1", and this output is denoted by the "equal" signal with the entry of V=RQ=1(V=RQ=1 · EQU).

The inverted output of the OR gate circuit 50 is denoted by the "unequal" signal with the entry of V=RQ=1(V=RQ=1 · UNEQ).

The R bit and C bit of entry i are supplied to the AND gate circuit 31-i, and the R bit and the inverted signal of the C bit of entry i are supplied to the AND gate circuit 32-i. The output of the AND gate circuit 29-i (that is, the "equal" signal i, EQUi) and the output of the AND gate circuit 31-i are supplied to the AND gate circuit 33-i. The "equal" signal i (EQUi) and the output of the AND gate circuit 32-i are supplied to the AND gate circuit 34-i. The outputs of the AND gate circuits 33-1 through 33-n are supplied to the OR gate circuit 51. The output of the OR gate circuit 51 becomes logic "1" when the R and C bits of the entry with the same address are "1, 1", and it is denoted by RC="1, 1". The outputs of the AND gate circuits 34-1 through 34-n are supplied to the OR gate circuit 52. The output of the OR gate circuit 52 becomes logic "1" when the R and C bit of the entry with the same address are "1, 0", and it is denoted by RC="1, 0".

Figure 3C illustrates a construction of a circuit for producing the queue register signal Q · REG. The output of the AND gate circuit 35 becomes logic "1" when the following three conditions are fulfilled: that the key storage access request is a data fetch command, that the "unequal" signal with the entry of V=1(V=1 · UNEQ)

is logic "1", and that the queue full signal (Q · FULL) is logic "0". The output of the AND gate circuit 36 becomes logic "1" when the following three conditions are fulfilled: that the key storage access request is a data store command, that the "unequal" signal with the entry of V=1(V=1 · UNEQ)

is logic "1", and that the queue full signal (Q · FULL) is logic "0". The output of the AND gate circuit 37 becomes logic "1" when the following four conditions are fulfilled: that the key storage access request is a data store command, that the "equal" signal with the entry of V=1(V=1 · EQU)

is logic "1", that the RC="1, 0" signal is logic "1", and that the queue full signal (Q · FULL) is logic "0". The outputs of the AND gate circuits 35, 36, and 37 are supplied to the OR gate circuit 53. The output of the OR gate circuit 53 is the queue register signal (Q · REG).

Figure 3D illustrates the construction of circuits for producing the set signals for the V and RQ bits and the reset signals for the RQ bits of the entries 1 through n. The content of the in-queue counter 7 is the key queue writing address and is supplied to the decoder circuit 59. The output of the decoder circuit 59 corresponding to entry i and the queue register signal are supplied to the AND gate circuit 38-i. The output of the AND gate circuit 38-i is the set signal for $V_i$ and $RQ_i$ ($V_i \cdot RQ_i \cdot SET$). When the content of the in-queue counter 7 designates entry i, the i-th output of the decoder circuit 59 is logic "1". When the queue register signal (Q · REG) becomes logic "1" in this case, the set signal for $V_i$ and $RQ_i$ ($V_i \cdot RQ_i \cdot SET$) becomes logic "1", the $V_i$ and $RQ_i$ bits of entry i are set to logic "1", and the content of the in-queue counter 7 is counted up by +1 and becomes i+1. The content of the out-queue counter 13 is the key queue reading address and is supplied to the decoder circuit 60. The ith output of the decoder circuit 60 and the queue read signal (Q · READ) are supplied to the AND gate circuit 39-i. The output of the AND gate circuit 39-i is the reset signal for the $RQ_i$ bit of the entry i ($RQ_i$ · RES). When the content of the out-queue counter 13 is i, the ith output of the decoder circuit 60 is logic "1". When the queue read signal (Q · READ) becomes logic "1" in this case, the reset signal for $RQ_i$ bit becomes logic "1", the RQ bit of the entry i is reset to logic "0", and the content of the out-queue counter 13 is counted up by +1 and becomes i+1.

Figure 3E illustrates the construction of the circuit for producing the reset signals of the V bits of the entry 1 through n. The output of the AND gate circuit 41 becomes logic "1" when the following four conditions are fulfilled: that the key storage access request is the data store command, that the "equal" signal with the entry of

$$V=1(V=1 \cdot EQU)$$

is logic "1", that the RC="1, 0" signal is logic "1", and that the queue full signal (Q · FULL) is logic "0". The output of the AND gate circuit 41 and the output of the AND gate circuit 29-i ("equal" signal i) are supplied to the AND gate circuits 40-1 through 40-n. The output of the AND gate circuit 40-i is the reset signal for the $V_i$ bit ($V_i$ · RES). The flip-flop circuits 56-1 through 56-n are used for storing the V bits of the entries 1 through n. The set signal for the $V_i$ and $RQ_i$ bits ($V_i \cdot RQ_i$ · SET) is supplied to the flip-flop circuit 56-i, and the reset signal for the $V_i$ ($V_i$ · RES) bit is supplied to the reset input of the flip-flop circuit 56-i. The flip-flop circuits 57-1 through 57-n are used for storing the RQ bits of the entries 1 through n. The set signal for the $V_i$ and $RQ_i$ bits ($V_i \cdot RQ_i$ · SET) is supplied to the set input of the flip-flop circuit 57-i, and the reset signal for the $RQ_i$ bit ($RQ_i$ · RES) is supplied to the reset input of the flip-flop circuit 57-i.

In the above-mentioned embodiment, the key-storage access request from the main storage control unit 3 is once set into the key register 9 and compared with the content of the key queue 8. If a key-storage access request with the same content as the newly received one has already been registered in the key queue registering of the received key-storage access request is not executed. If the key storage access request with the same content is not registered in the key queue 8 and if the key storage access request is produced by the main storage fetch or store command, the key-storage access request is registered in the key queue 8. The registered key-storage access requests are read out in order, set into the key storage access register 11, and sent to the key storage unit 2.

Figure 4A illustrates one word of the key storage unit 2 and the key storage address. Figure 4B illustrates one byte (word) of the main storage unit 1 and the main storage address. One word of the key storage unit 2 includes a main storage protection key, a reference bit, and a change bit. The key storage address corresponds to one unit block of the main storage unit 1. In the above-mentioned embodiment, the R bit and the C bit in the key storage unit 2 are respectively changed to logic "1" and "0" in the case of data fetch and are changed to logic "1" and "1" in the case of data store. However, the C bit is preferably kept unchanged in the case of data fetch. In order to change only one of the R and C bits, mask bits for R and C bits (RM and CM bits) may be used. Figure 4C illustrates the data format of one entry of the key queue 8 with RM and CM bits.

In the above-mentioned embodiment, when a key command is received by the key register 9, the key address of the key command is compared with the address of the key-storage access request registered in the key queue 8. If the key storage access request has the same address as the key command, the execution of the key command stops until this key-storage access request is executed. Among the key commands, however, the reset reference bit command (RRB command) is usually repeatedly executed to reset all the R bits in the key storage unit 2. Thus, it is desirable to execute the RRB command without waiting for the execution of the registered key-storage access request with the same address, from the viewpoint of speeding up the processing.

Another embodiment of the present invention provides apparatus in which the RRB command is executed without waiting for the execution of the key-storage access request with the same address registered in the key queue 8. In this apparatus, the construction of the key storage control unit 4 is the same as shown in Fig. 2, except that each entry of the key queue 8 has the mask bits RM and CM. The processing for the data fetch and the data store in this system is the same as described above.

When the insert storage key command (ISK command) is set in the key register 9, the content of the address portion 9-2 is compared with the address data of the entries 1 through n. If the content of the address portion 9-2 is equal to the address data of an entry with V=RQ=1, the execution of the ISK command stops until the execution of the access request registered in the corresponding entry is finished. If the content of the address portion 9-2 is not equal to the address data of any entry with V=RQ=1, the content of the key register 9 is set into the key-storage access register 11, and the ISK command is executed.

When the set storage key command (SSK command) is set into the key register 9, the content of the address portion 9-2 is compared with the address data of the entries 1 through n of the key queue 8. If the content of the address portion 9-2 is equal to the address data of one entry with V=RQ=1, the execution of the SSK command stops until the execution of the access request registered in the corresponding entry. If the content of the address portion 9-2 is equal to the address data of one entry with V=1 and RQ=0, the V bit and the RQ bits of the corresponding entry are reset to logic "0", the content of the key register 9 is set into the key storage access register 11, and the SSK command is executed. If the content of the address portion 9-2 is not equal to the address data of any entry with V=1, the content of the key register 9 is set into the key storage access register 11, and the SSK command is executed.

When the RRB command is set into the key register 9, the content of the address portion 9-2 is compared with the address data of the entries 1 through n. If the content of the address portion 9-2 is equal to the address data of one entry with V=RQ=1 and the RM, R, CM, and C bits of this entry are "1111", then the V and RQ bits of this entry are reset to "0", the content of the key register 9 is set into the key storage access register 11, and the RM, R, CM, and C bits in the key storage access register 11 are set to "1011". Then, the RRB command is executed, and the R and C bit of the corresponding address in the key storage unit 2 are set to "01". If the content of the address portion 9-2 is equal to the address data of one entry with V=R=1 and the RM, R, CM and C bits of this entry are "1100", then the V and RQ bits of this entry are changed to "0", the content of the key register 9 is set into the key storage access register 11, and the RM, R, CM and C bits of this entry are set to "1000". Then, the RRB command is executed, and the R bit of the corresponding address in the key storage unit 2 is reset to "0". In this case, the C bit of the corresponding address in the key storage unit 2 is not changed.

If the content of the address portion 9-2 is equal to the address data of any entry with V=1 and RQ=0, then the V and RQ bits of this entry are reset to "0, 0", the content of the key register 9 is set into the key-storage access register 11, and the RM, R, CM, and C bits of the key register 11 are set to "1000". Then, the RRB command is executed as described above. If the content of the address portion 9-2 is not equal to the address data of any entry with V=1, the content of the key register 9 is set into the key storage access register 11, the RM, R, CM, and C bits of the key storage access register 11 are set to "1000", then the RRB command is executed.

The above-mentioned operation of the RRB command is illustrated in Fig. 5.

As described above, in accordance with this embodiment of the present invention, the processing of an RRB command can be speeded up, so that the RRB command can be executed at a comparatively high speed.

**Claims**

1. Data processing apparatus comprising:

a main storage unit (1) comprising a plurality of memory blocks;

a key storage unit (2) for storing in respect of each of the said memory blocks a corresponding main storage protection key and a corresponding reference bit (R), which is set if the corresponding block is read or written into, and a corresponding change bit (C), which indicates a change of the corresponding block;

a processing unit (5) operable to produce block access requests designating respective selected memory blocks of the main storage unit (1);

a main storage control unit (3), operatively connected to the main storage unit (1) and to the said processing unit (5), for processing the block access requests and producing in response to each of them in turn a key storage access request for the key storage unit (2), which key storage access request demands a particular setting for at least one of those reference and change bits in the key storage unit (2) that correspond to the selected memory block designated in the block access request concerned; and

a key storage control unit (4), for controlling access to the key storage unit (2), including a key queue (8) operatively connected to the main storage control unit (3), and to the key storage unit (2), for temporarily holding a plurality of the said key storage access requests supplied from the main storage control unit (3); operation of the key storage control unit (4) being such that key storage access request from the main storage control unit (3) are registered in order in the key queue (8) and, independently of that registration process, key storage access requests already registered in the key queue (8) are read out therefrom in turn for further processing;

the said key storage control unit (4) further including comparing means (10), operatively connected for effecting a comparison between predetermined portions of each key storage access request newly supplied from the main storage control unit (3) and respective corresponding portions of key storage access requests already registered in the key queue (8), and inhibiting means (35, 36, 37, 45, 53) operatively connected to the said comparing means (10) and the key queue (8) for inhibiting such a newly-supplied key storage access request from being registered in the key queue (8) if the said predetermined portions of the newly-supplied key storage access request are found by the said comparison to be identical to the corresponding portions of one of the key storage access requests already registered in the key queue (8).

2. Apparatus as claimed in claim 1, wherein the said processing unit (5) is one of a plurality of such processing units (5) to which the said main storage control unit (3) is operatively connected for processing the block access requests produced by those processing units (5) and producing in response to each of those requests in turn a key storage access request for the key storage unit (2).

3. Apparatus as claimed in claim 1 or 2, wherein the said key queue (8) of the key storage control unit (4) is also operatively connected to the or each processing unit (5), as the case may be.

4. Apparatus as claimed in claim 1, 2 or 3, wherein the said key queue (8) comprises a plurality of unit memories (8-1 to 8-n), each of which is operable to store address data, a reference bit and a change bit.

5. Apparatus as claimed in any preceding claim, wherein the said key storage access requests are main storage data fetch commands, main storage data store commands or key commands.

6. Apparatus as claimed in claim 5, wherein the said key storage control unit (4) further comprises decoding means (58), operatively connected to the said inhibiting means (35, 36, 37, 45, 53) and to receive the said newly-supplied key storage access request, for decoding that access request to determine whether it is a main storage data fetch command, a main storage data store command, or a key command.

7. Apparatus as claimed in claim 5 or 6, wherein a key command is either:

an insert storage key command, for reading the said main storage protection key in the said key storage unit (2); or

a set storage key command, for setting the said main storage protection key into the said key storage unit (2); or

a reset reference bit command, for resetting the said reference bit in the said key storage unit (2).

8. Apparatus as claimed in claim 7, wherein the apparatus is operable, if the newly-supplied key storage access request is a reset reference bit command, to compare an address portion of that reset reference bit command with respective address portions of key storage access requests already registered in the said key queue (8) and, if the address portion of the said newly-supplied key storage access request is found to be identical to the address portion of any one of the already-registered key storage access requests, the reference bit corresponding to the address in the key storage unit (2) designated by the address portion of the said reset reference bit command is reset, and the change bit of that key storage unit address is changed, if necessary, so as to correspond to the setting demanded by the said one already-registered key storage access request.

**Patentansprüche**

1. Datenverarbeitungsvorrichtung mit:

einer Hauptspeichereinheit (1), die eine Vielzahl von Speicherblöcken umfaßt;

einer Schlüsselspeichereinheit (2), um, in Bezug auf jeden der genannten Speicherblöcke, einen entsprechenden Hauptspeicherschutzschlüssel und ein entsprechendes Referenzbit (R), welches gesetzt wird, wenn der entsprechende Block gelesen oder eingeschrieben wird, und ein entsprechendes Änderungsbit, welches die Änderung des entsprechenden Blockes anzeigt, zu speichern;

einer Prozessoreinheit (5), die betreibbar ist, um Blockzugriffsanforderungen zu erzeugen, welche jeweils ausgewählte Speicherblöcke von der Hauptspeichereinheit (1) bestimmen;

einer Hauptspeichersteuereinheit (3), die wirkungsmäßig mit der Hauptspeichereinheit (1) und mit der genannten Prozessoreinheit (5) verbunden ist, um die Blockzugriffsanforderungen zu verarbeiten und, ansprechend auf jede von ihnen, der Reihe nach eine Schlüsselspeicherzugriffsanforderung für die Schlüsselspeichereinheit (2) zu erzeugen, welche Schlüsselspeicherzugriffsanforderung eine besondere Einstellung für wenigstens eines jener Referenz- und Änderungsbits in der Schlüsselspeichereinheit erfordert, welche jenem ausgewählten Speicherblock entspricht, der in der betreffenden Blockzugriffsanforderung bestimmt ist; und

einer Schlüsselsteuerspeichereinheit (4) zum Steuern des Zugriffs zu der Schlüsselspeichereinheit (2), einschließlich einer Schlüsselwarteschlange (8), die wirkungsmäßig mit der Hauptspeichersteuereinheit (3) und mit der Schlüsselspeichereinheit (2) verbunden ist, um temporär eine Vielzahl der genannten Schlüsselspeicherzugriffsanforderungen zu halten, die von der Hauptspeichersteuereinheit (3) geliefert werden; wobei der Betrieb der Schlüsselspeichersteuereinheit (4) derart ist, daß Schlüsselspeicherzugriffsanforderungen von der Hauptspeichersteuereinheit (3) in der Reihenfolge der Schlüsselwarteschlange (8) registriert werden, und, unanhängig von jenem Registrierungsprozeß, Schlüsselspeicherzugriffsanforderungen, die bereits in der Schlüsselwarteschlange (8) registriert sind, daraus der Reihe nach für die weitere Verarbeitung ausgelesen werden;

die genannte Schlüsselspeichersteuereinheit (4) ferner eine Vergleichseinrichtung (10) enthält, die wirkungsmäßig verbunden ist, um einen Vergleich zwischen vorbestimmten Abschnitten von jeder Schlüsselspeicherzugriffsanforderung, die von der Hauptspeichersteuereinheit (3) neu geliefert wird, und entsprechenden Abschnitten von Schlüsselspeicherzugriffsanforderungen, die bereits in der Schlüsselwarteschlange (8) registriert sind, bewirkt, und Sperreinrichtungen (35, 36, 37, 45, 53), die wirkungsmäßig mit der genannten Vergleichseinrichtung (10) und der Warteschlange (8) verbunden sind, um zu verhindern, daß solch eine neu zugeführte Schlüsselspeicherzugriffsanforderung in der Warteschlange (8) registriert wird, falls die genannten vorbestimmten Abschnitte der neu zugeführten Schlüsselspeicherzugriffsanforderung durch den genannten Vergleich als identisch mit den entsprechenden Abschnitten von einer der Schlüsselspeicherzugriffsanforderungen gefunden werden, welche bereits in der Warteschlange (8) registriert sind.

2. Verfahren nach Anspruch 1, bei dem die genannte Prozessoreinheit (5) eine von einer Vielzahl von solchen Prozessoreinheiten (5) ist, mit welcher die genannte Hauptspeichersteuereinheit (3) wirkungsmäßig verbunden ist, um die Blockzugriffsanforderungen zu verarbeiten, die durch jene Verarbeitungseinheiten (5) erzeugt wurden, und in Abhängigkeit von jeder von solchen Anforderungen der Reihe nach eine Schlüsselspeicherzugriffsanforderung für die Schlüsselspeichereinheit (2) zu erzeugen.

3. Verfahren nach Anspruch 1 oder 2, bei dem die genannte Schlüsselwarteschlange (8) der Schlüsselspeichersteuereinheit (4) ebenfalls wirkungsmäßig mit der oder jeder Prozessoreinheit (5), wie es der Fall sein mag, verbunden ist.

4. Vorrichtung nach Anspruch 1, 2 oder 3, bei der die genannte Schlüsselwarteschlange (8) eine Vielzahl von Einheitsspeichern (8-1 bis 8-n) umfaßt, von denen jede betreibbar ist, um Adreßdaten, ein Referenzbit und ein Änderungsbit zu speichern.

5. Vorrichtung nach einem der vorhergehenden Ansprüche, bei der die genannten Schlüsselspeicherzugriffsanforderungen Hauptspeicherdatenabrufbefehle, Hauptspeicherdatenspeicherbefehle oder Schlüsselbefehle sind.

6. Vorrichtung nach Anspruch 5, bei der die genannte Schlüsselspeichersteuereinheit (4) ferner Decodereinrichtungen (58) umfaßt, die wirkungsmäßig mit den genannten Sperreinrichtungen (35, 36, 37, 45, 53) und zum Empfangen der genannten, neu zugeführten Schlüsselspeicherzugriffsanforderung verbunden sind, um jene Zugriffsanforderung zu decodieren, um zu bestimmen, ob sie ein Hauptspeicherdatenabrufbefehl, ein Hauptspeicherdatenspeicherbefehl oder ein Schlüsselbefehl ist.

7. Vorrichtung nach Anspruch 5 oder 6, bei der ein Schlüsselbefehl entweder:

ein Einfügungsspeicherschlüsselbefehl, zum Lesen der genannten Hauptspeicherschutzschlüssel in die genannte Speicherschlüsseleinheit (2); oder

ein Setzspeicherschlüsselbefehl, zum Setzen des genannten Hauptspeicherschutzschlüssels in die genannte Schlüsselspeichereinheit (2); oder

ein Rücksetzreferenzbitbefehl, zum Rücksetzen des genannten Referenzbit in die genannte Schlüsselspeichereinheit (2) ist.

8. Vorrichtung nach Anspruch 7, bei der die Vorrichtung betreibbar ist, falls die neu zugeführte Schlüsselspeicherzugriffsanforderung ein Rücksetzreferenzbitbefehl ist, um einen Adreßabschnitt von jenem Rücksetzreferenzbitbefehl mit jeweiligen Adreßabschnitten der Schlüsselspeicherzugriffsanforderungen zu vergleichen, die bereits in der genannten Schlüsselwarteschlange (8) registriert sind, falls der Zugriffsabschnitt der genannten neu zugeführten Schlüsselspeicherzugriffsanforderung als identisch mit dem Adressenabschnitt von irgendeiner der bereits registrierten Schlüsselspeicherzugriffsanforderungen gefunden wird, wobei das Referenzbit, das der Adresse in der Schlüsselspeichereinheit (2) entspricht, die durch den Adressenabschnitt des genannten Rücksetzreferenzbitbefehls zurückgesetzt ist, und das Änderungsbit von jener Schlüsselspeichereinheitsadresse geändert wird, falls notwendig, so daß es der Einstellung entspricht, die durch die schon registrierte Schlüsselspeicherzugriffsanforderung gefordert ist.

**Revendications**

1. Dispositif de traitement de données comprenant:

une unité de mémoire centrale (1) comprenant un ensemble de blocs de mémoire;

une unité de mémoire de clés (2) pour mémoriser par rapport à chacun des blocs de mémoire une clé de protection de mémoire centrale correspondante et un bit de référence correspondant (R), qui est établir si le bloc correspondant fait l'objet d'une lecture ou d'une écriture, et un bit de changement correspondant (C), qui indique un changement du bloc correspondant;

une unité de traitement (5) pourvant être mise en fonctionnement pour produire des demandes d'accès à un bloc indiquant des blocs de mémoire sélectionnés respectifs de l'unité de mémoire centrale (1);

une unité de commande de mémoire centrale (3), connectée activement à l'unité de mémoire centrale (1) et à l'unité de traitement (5), pour traiter les demandes d'accès à un bloc et pour produire en réponse à chacune d'elles successivement une demande d'accès à la mémoire de clés pour l'unité de mémoire de clés (2), cette demande d'accès à la mémoire de clés exigeant un établissement particulier pour au moins un des bits de référence et de changement dans l'unité de mémoire de clés (2) qui correspondent au bloc de mémoire sélectionné indiqué dans la demande d'accès à un bloc concernée; et

une unité de commande de mémoire de clés (4), pour commander l'accès à l'unité de mémoire de clés (2), incluant une file d'attente de clés (8) connectée activement à l'unité de commande de mémoire centrale (3) et à l'unité de mémoire de clés (3), pour maintenir temporairement un ensemble des demandes d'accès à la mémoire de clés fournies par l'unité de commande de mémoire centrale (3); le fonctionnement de l'unité de commande de mémoire de clés (4) étant tel que les demandes d'accès à la mémoire de clés provenant de l'unité de commande de mémoire centrale (3) sont enregistrées dans un ordre dans la file d'attente de clés (8) et, indépendamment de ce traitement d'enregistrement, les demandes d'accès à la mémoire de clés déjà enregistrées dans la file d'attente de clés (8) sont lues dans celle-ci successivement pour un autre traitement;

l'unité de commande de mémoire de clés (4) incluant en outre un moyen de comparaison (10), connecté activement pour effectuer une comparaison entre des parties prédéterminées de chaque demande d'accès à la mémoire de clés nouvellement fournie par l'unité de commande de mémoire centrale (3) et les parties correspondantes respectives des demandes d'accès à la mémoire de clés déjà enregistrées dans la file d'attente de clés (8), et un moyen d'interdiction (35, 36, 37, 45, 53) connecté activement au moyen de comparaison (10) et à la file d'attente de clés (8) pour interdire à cette demande d'accès à la mémoire de clés nouvellement fournie d'être enregistrée dans la file d'attente de clés (8) si les parties prédéterminées de la demande d'accès à la mémoire de clés nouvellement fournie sont trouvées par la comparaison comme étant identiques aux parties correspondantes d'une des demandes d'accès à la mémoire de clés déjà enregistrées dans la file d'attente de clés (8).

2. Dispositif selon la revendication 1, dans lequel l'unité de traitement (5) est une d'une ensemble d'unités de traitement (5) auxquelles l'unité de commande de mémoire centrale (3) est connectée activement pour traiter les demandes d'accès à un bloc produites par ces unités de traitement (5) et pour produire en réponse à chacune de ces demandes successivement une demande d'accès à la mémoire de clés pour l'unité de mémoire de clés (2).

3. Dispositif selon l'une quelconque des revendications 1 et 2, dans lequel la file d'attente de clés (8) de l'unité de commande de mémoire de clés (4) est également connectée activement à l'unité ou à chaque unité de traitement (5) quelque puisse être le cas.

4. Dispositif selon l'une quelconque des revendications 1 à 3, dans lequel la file d'attente de clés (8) comprend un ensemble de mémoires unitaires (8-1 à 8-n) dont chacune peut être mise en fonctionnement pour mémoriser des données d'adresse, un bit de référence et un bit de changement.

5. Dispositif selon l'une quelconque des revendications 1 à 4, dans lequel les demandes d'accès à la mémoire de clés sont des commandes de lecture de données en mémoire centrale, des commandes de mémorisation de données en mémoire centrale ou des commandes de clé.

6. Dispositif selon la revendication 5, dans lequel l'unité de commande de mémoire de clés (4) comprend en outre un moyen de décodage (58), connecté activement au moyen d'interdiction (35, 36, 37, 45, 53) et pour recevoir la demande d'accès à la mémoire de clés nouvellement fournie, pour décoder cette demande d'accès afin de déterminer si c'est une commande de lecture de données en mémoire centrale, une commande de mémorisation de données en mémoire centrale, ou une commande de clé.

7. Dispositif selon l'une quelconque des revendications 5 et 6, dans lequel une commande de clé est soit:

une commande d'insertion de clé de mémoire, pour lire la clé de protection de mémoire centrale dans l'unite de mémoire de clés (2); soit

une commande d'établissement de clé de mémoire, pour établir la clé de protection de mémoire centrale dans l'unité de mémoire de clés (2); soit

une commande de remise à zéro de bit de référence, pour remettre à zéro le bit de référence dans l'unité de mémoire de clés (2).

8. Dispositif selon la revendication 7, dans lequel le dispositif peut être mis en fonctionnement, si la demande d'accès à la mémoire de clés nouvellement fournie est une commande de remise à zéro de bit de référence, pour comparer une partie d'adresse de cette commande de remise à zéro de bit de référence aux parties d'adresse respectives des demandes d'accès à la mémoire de clés déjà enregistrées dans la file d'attente de clés (8) et, si la partie d'adresse de la demande d'accès à la mémoire de clés nouvellement fournie est trouvée comme étant identique à la partie d'adresse de n'importe laquelle des demandes d'accès à la mémoire de clés déjà enregistrées, le bit de référence correspondant à l'adresse dans l'unité de mémoire de clés (2) indiquée par la partie d'adresse de la commande de remise à zéro de bit de référence est remis à zéro, et le bit de changement de cette adresse d'unité de mémoire de clés est changé, si nécessaire, de manière à ce qu'il corresponde à l'établissement demandé par la demande d'accès à la mémoire de clés déjà enregistrée.

Fig. I

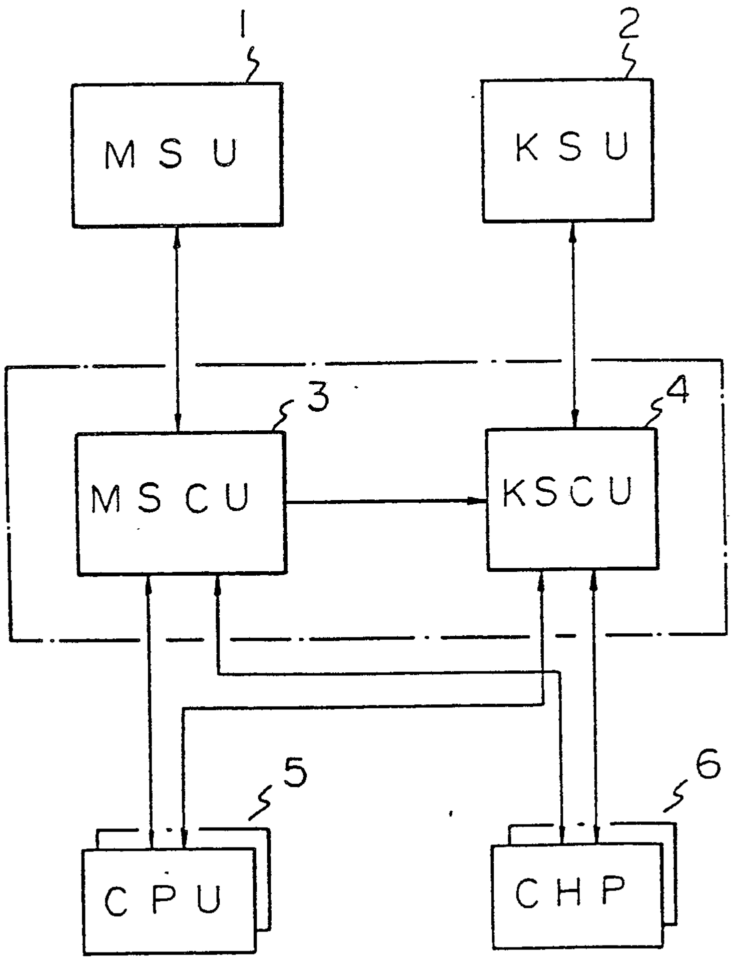

Fig. 2

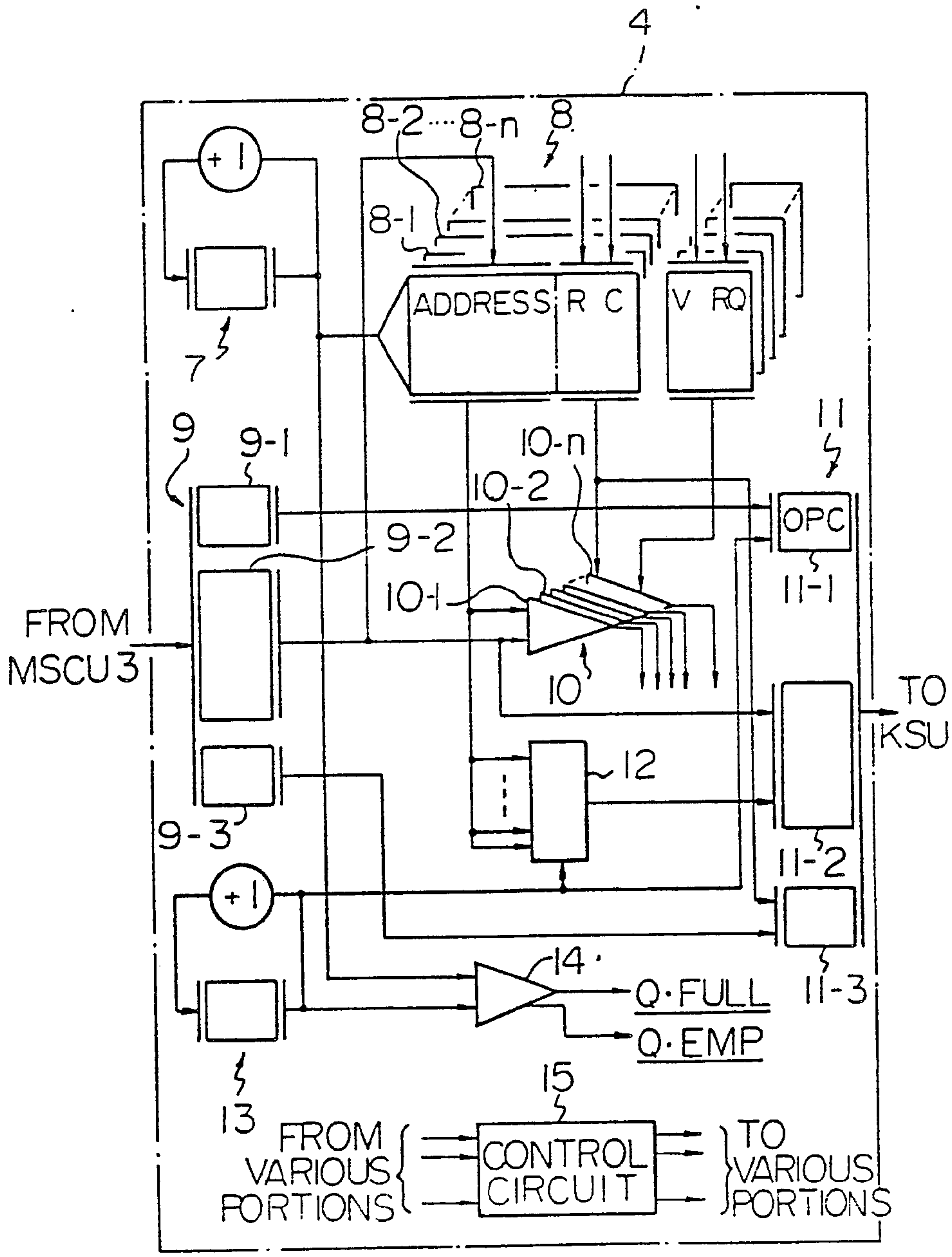
4
8-2
8-n
8
8-1
+1
ADDRESS
R C
V RQ
7
9
9-1
9-2
10-n
10-2
10-1
10
11
OPC
11-1
FROM MSCU3
TO KSU2
12
11-2
9-3
+1
11-3
14
Q·FULL
Q·EMP
13
15
FROM VARIOUS PORTIONS
CONTROL CIRCUIT
TO VARIOUS PORTIONS

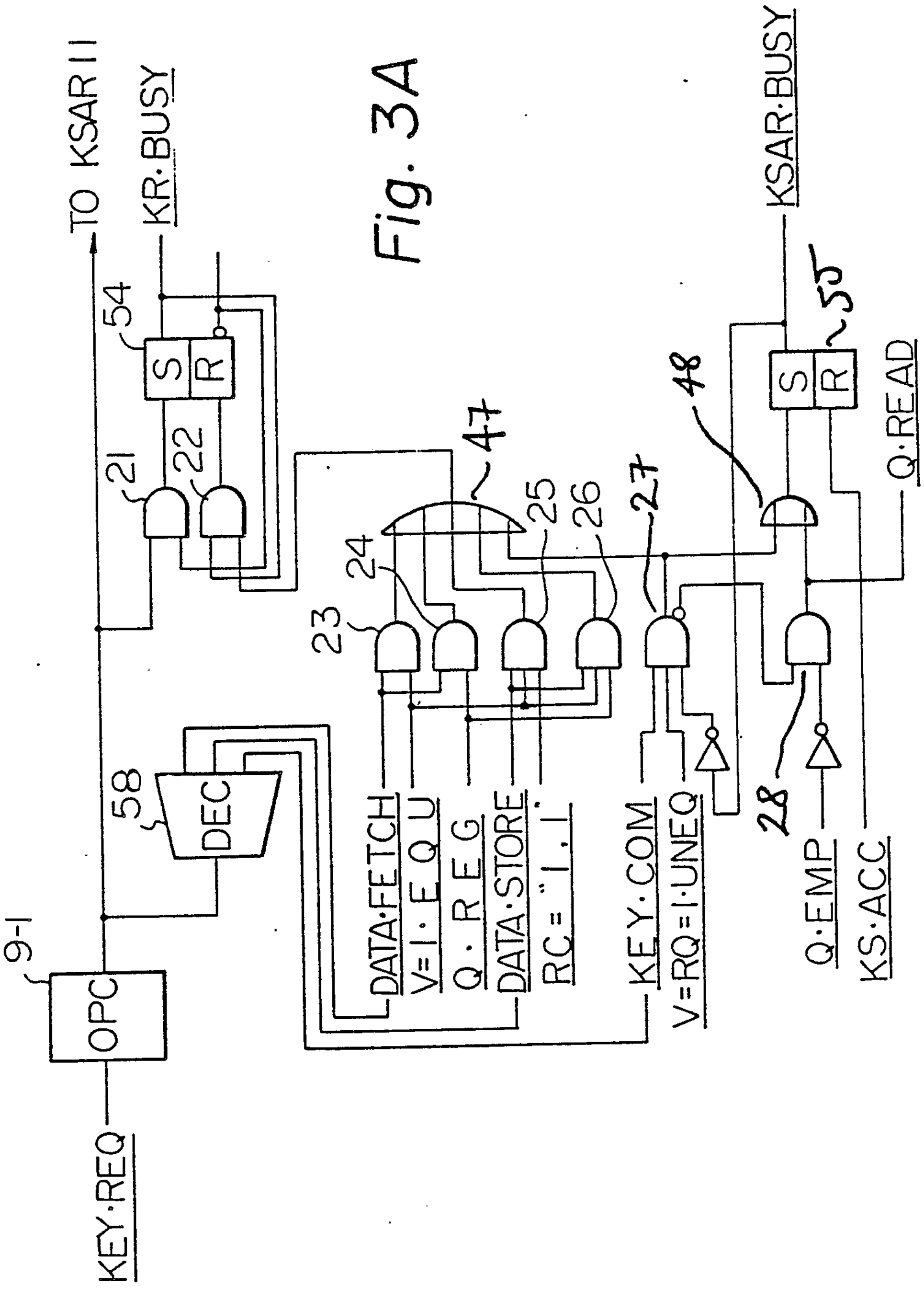
KEY·REQ
OPC
9-1
DEC
58
TO KSAR 11
KR·BUSY
54
S
R
21
22
47
23
24
25
26
27
48
55
28
DATA·FETCH
V=1·EQU
Q·REG
DATA·STORE
RC="1.1"
KEY·COM
V=RQ=1·UNEQ
Q·EMP
KS·ACC
Q·READ
KSAR·BUSY

Fig. 3A

Fig. 3B

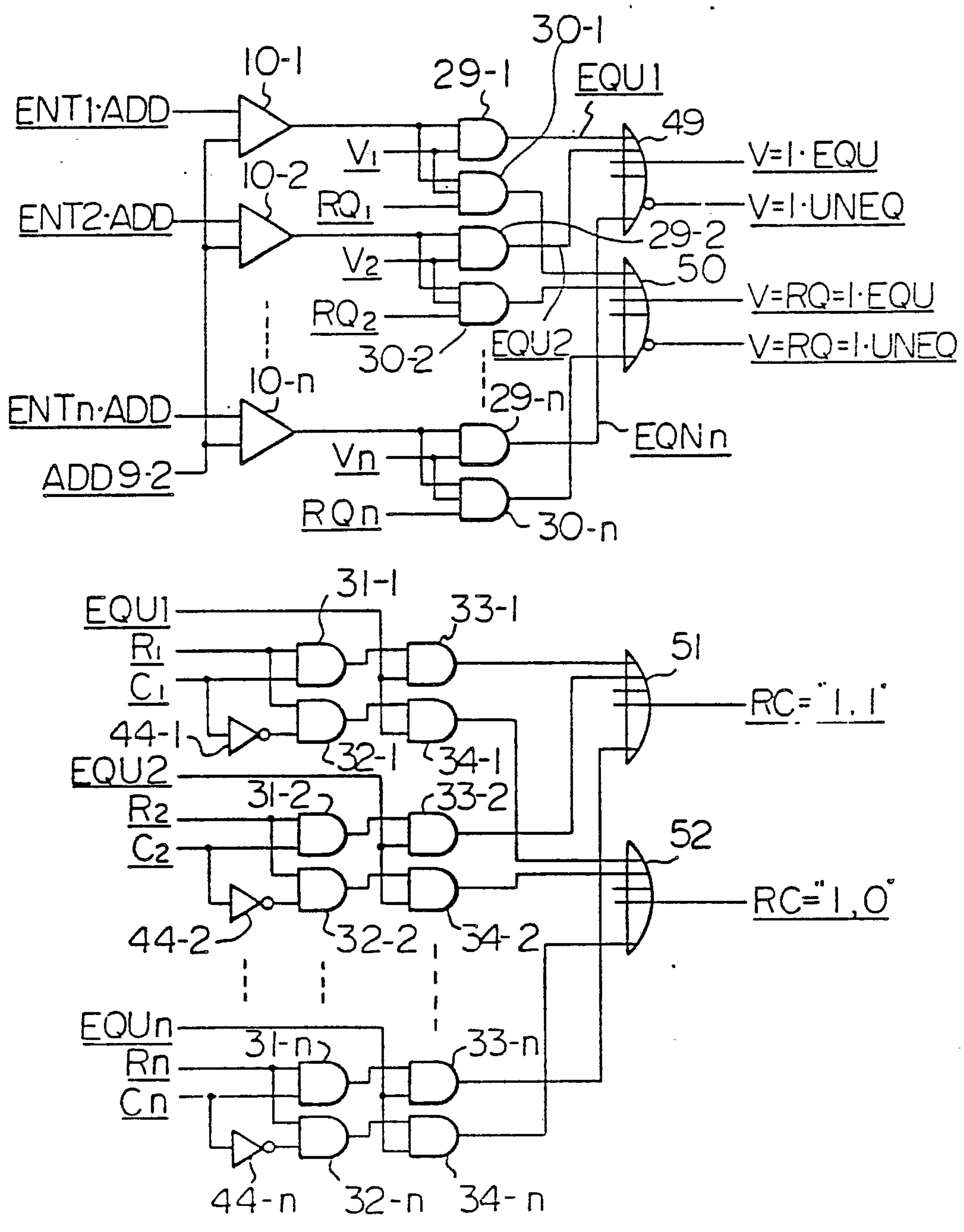
10-1
29-1
30-1
EQU1
ENT1·ADD
49
V1
V=1·EQU
10-2
RQ1
V=1·UNEQ
ENT2·ADD
29-2
V2
50
RQ2
V=RQ=1·EQU
30-2
EQU2
V=RQ=1·UNEQ
10-n
29-n
ENTn·ADD
EQNn
Vn
ADD9-2
RQn
30-n
31-1
EQU1
33-1
R1
51
C1
RC="1,1"
44-1
32-1
34-1
EQU2
31-2
33-2
R2
52
C2
RC="1,0"
44-2
32-2
34-2
EQUn
31-n
33-n
Rn
Cn
44-n
32-n
34-n

Fig. 3C

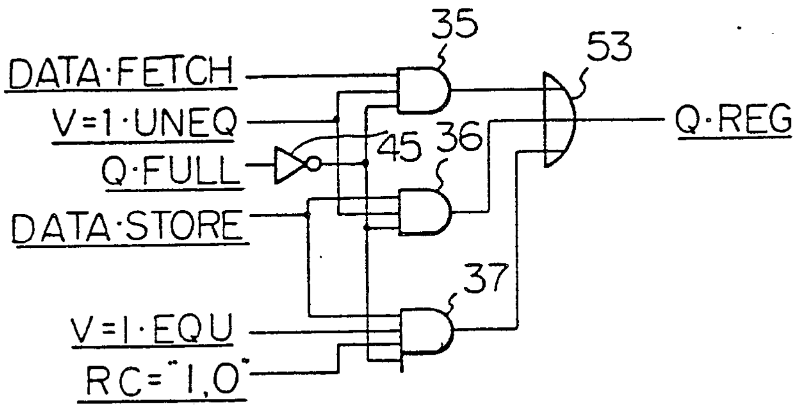
35
53
DATA·FETCH
V=1·UNEQ
Q·REG
45 36
Q·FULL
DATA·STORE
37
V=1·EQU
RC="1,0"

Fig. 3D

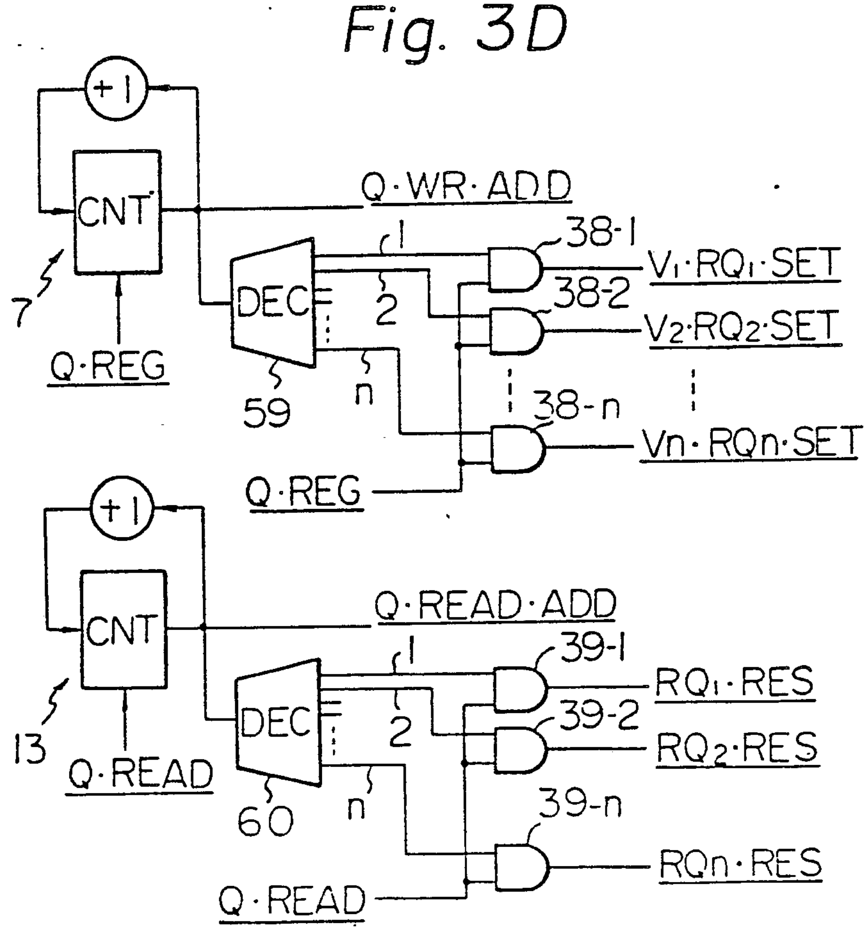
+1
CNT
Q·WR·ADD
38-1
DEC
1
2
V1·RQ1·SET
38-2
V2·RQ2·SET
7
Q·REG
59
n
38-n
Vn·RQn·SET
Q·REG
+1
CNT
Q·READ·ADD
39-1
DEC
1
2
RQ1·RES
39-2
RQ2·RES
13
Q·READ
60
n
39-n
RQn·RES
Q·READ

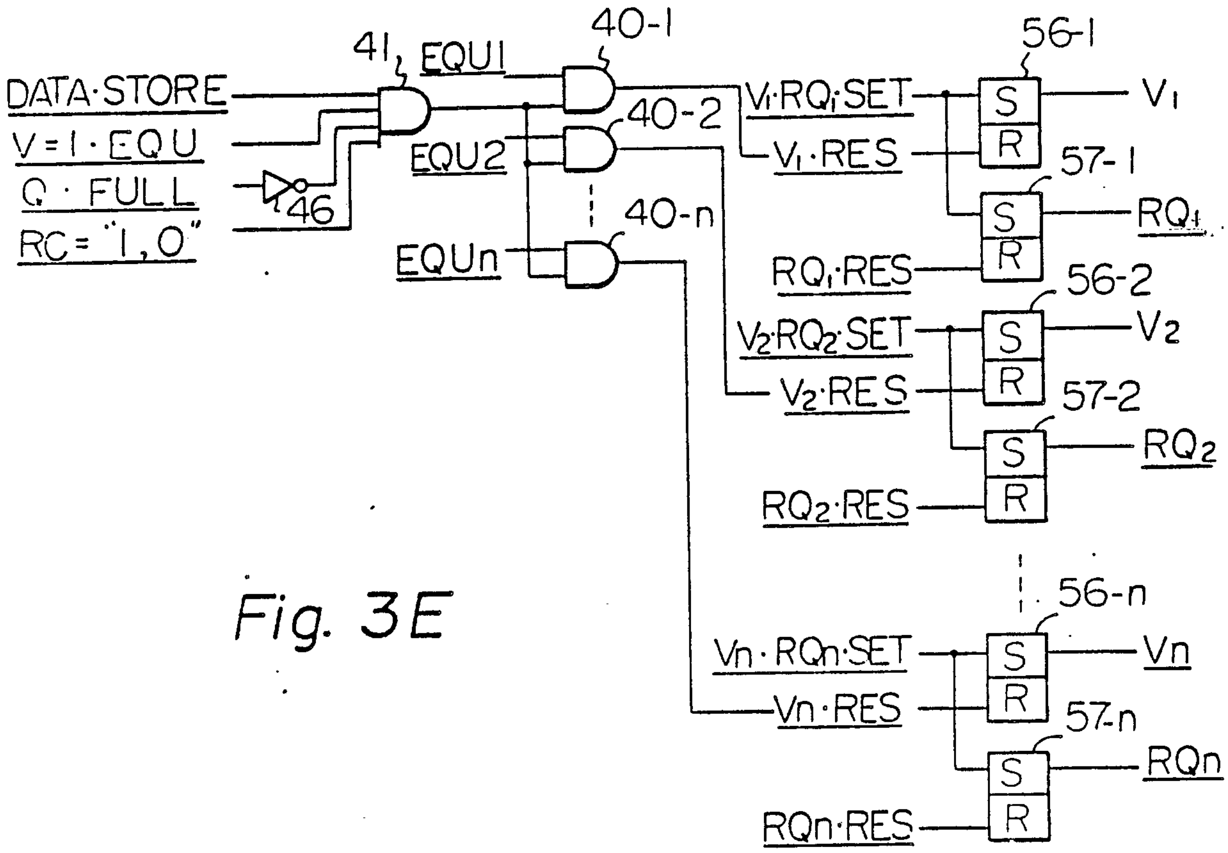
DATA·STORE
V=1·EQU
Q·FULL
RC="1,0"
41
46
EQU1
EQU2
EQUn
40-1
40-2
40-n
V1·RQ1·SET
V1·RES
RQ1·RES
V2·RQ2·SET
V2·RES
RQ2·RES
Vn·RQn·SET
Vn·RES
RQn·RES
56-1
57-1
56-2
57-2
56-n
57-n
S
R
V1
RQ1
V2
RQ2
Vn
RQn

Fig. 3E

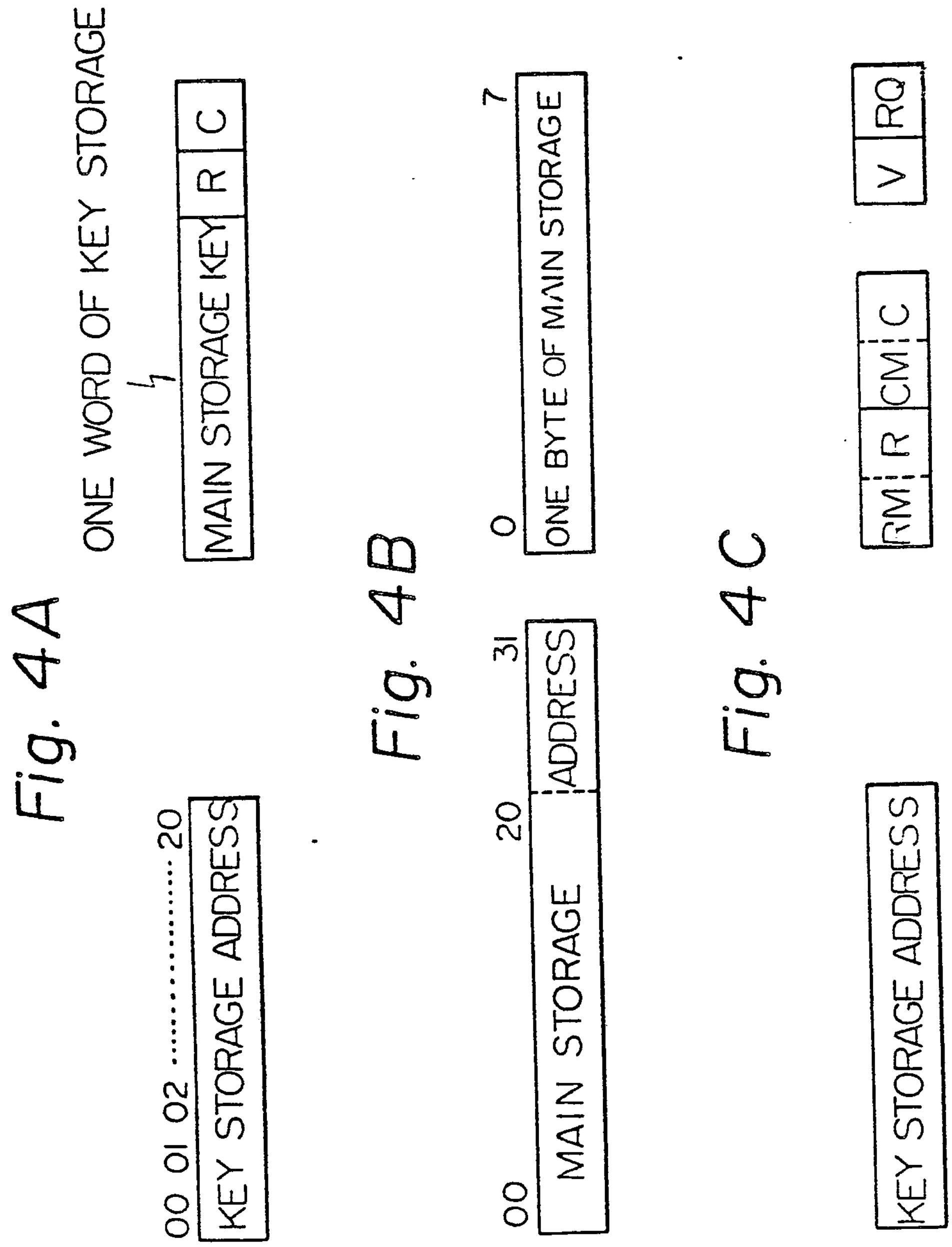


Fig. 4A

Fig. 4B

Fig. 4C

Fig. 5

| RESULT OF COMPARISON | RM,R,CM,C OF ENTRY | CONTROL OPERATION | V and RQ OF ENTRY | RM,R,CM,C OF KSAR 11 |
|---|---|---|---|---|
| V = RQ = 1 · EQU | 1 1 1 1 | KREG9→KSAR11 | RESET TO V=0, RQ=0 | 1 0 1 1 |
| | 1 1 0 0 | KREG9→KSAR11 | RESET TO V=0, RQ=0 | 1 0 0 0 |
| V= 1· EQU<br>V=RQ=1·UNEQ | —— | KREG9→KSAR11 | RESET TO V=0, RQ=0 | 1 0 0 0 |
| V=1 · UNEQ | —— | KREG9→KSAR11 | —— | 1 0 0 0 |